Europäisches Patentamt

European Patent Office

Office européen des brevets

(11) Publication number: 0 316 070
A1

# EUROPEAN PATENT APPLICATION

(21) Application number: 88309450.0

(22) Date of filing: 10.10.88

(51) Int. Cl.⁴: F16D 55/14

The title of the invention has been amended (Guidelines for Examination in the EPO, A-III, 7.3).

(30) Priority: 10.10.87 GB 8723839

(43) Date of publication of application:
17.05.89 Bulletin 89/20

(84) Designated Contracting States:
DE ES FR GB IT

(71) Applicant: LUCAS INDUSTRIES public limited company
Great King Street
Birmingham, B19 2XF West Midlands(GB)

(72) Inventor: Price, Anthony George
14 Meadow Lane Croseyceiliog
Cwmbran Gwent NP44 2EY Wales(GB)
Inventor: Campbell, Roy
The Corner House 1 Marlbrook Lane
Licky Rock Bromsgrove Worcestershire(GB)

(74) Representative: Spall, Christopher John et al
BARKER, BRETTELL & DUNCAN 138 Hagley Road
Edgbaston Birmingham B16 9PW(GB)

(54) Self-energising disc brake.

(57) In a self-energising disc brake of the spreading type the housing (3) has a substantially circular internal profile, and an actuator unit having an external profile similar to the profile of the housing (3), is adapted to be inserted into the housing (3) in an axial direction. The unit comprises a pair of pressure plates (12,13), balls or rollers (16) housed in complementary recesses (17) in adjacent faces of the plates (12,13), and tension springs (18) acting between the two plates (12,13). The unit may also include a brake-applying mechanism, suitably an hydraulic piston and cylinder assembly (20), and/or a wedge assembly (34). When the unit is inserted into the housing either or both assemblies (20,34) are displaced in a radially inwards direction.

FIG.1.

## IMPROVEMENTS IN SELF-ENERGISING DISC BRAKES

This invention relates to self-energising disc brakes of the kind in which rotatable friction discs provided with linings of friction material are adapted to be brought into engagement with spaced opposed braking surfaces in a housing by pressure plates located between the friction discs and centred by stationary locations, balls or rollers are located in co-operating oppositely inclined angularly spaced recesses in the adjacent faces of the pressure plates, tension springs act between the plates to urge them relatively towards each other, and the application of the brake is initiated by moving the pressure plates angularly in opposite directions, the pressure plates then moving apart by a tendency for the balls or rollers to ride up ramps defined by the edges of the recesses so that the pressure plates move into engagement with the friction discs which are urged into engagement with the radial surfaces, the pressure plates being carried round with the friction discs until one is arrested by the engagement of a lug on the plate with a drag-taking stop abutment in the housing, and the continued angular movement of the other pressure plate providing a servo action.

Self-energising brakes of the kind set forth may be dry or they may be of the liquid cooled or oil-immersed type, and such brakes are commonly used in tractors and like vehicles and are hereinafter called brakes of the kind set forth.

Known brakes of the kind set forth are often operated hydraulically for normal service braking or mechanically for parking or emergency braking. Irrespective of whether the brake is operated hydraulically or mechanically, the force from an hydraulic or a mechanical brake-applying mechanism is usually transmitted to the pressure plates through means which extend into the brake through a radial opening in the housing. For example, a pull-rod adapted to be withdrawn relatively from the housing in a radial direction extends through the opening and is coupled at its inner end to the free inner ends of a pair of toggle links at which the outer ends are each pivotally connected to a radially projecting lug on a respective one of the pressure plates. Difficulty is therefore experienced in installing the brake in a housing due to the problems of coupling together the pull-rod and the toggle links through the limited space defined by the radial opening.

According to our invention the pressure plates, the balls or rollers, and the tension springs define an expander mechanism of substantially circular outline which is adapted to be inserted into the housing in an axial direction and through an open end of the housing, the housing having a substantially circular internal profile complementary to that of the expander mechanism, and the pressure plates being provided with brake-actuating force-receiving abutment faces with which brake-applying means are adapted to co-operate and which are positioned between the inner and outer peripheral edges of the plates.

By omitting the conventional radial lugs from both pressure plates and with which the brake-applying means is normally adapted to co-operate, we are able to simplify the construction, and provide a more compact assembly.

Preferably the pressure plates are both provided with two pairs of brake-actuating force-receiving abutment faces, of which the two pairs are relatively spaced circumferentially and are adapted to be acted upon by first and second brake-applying means.

Conveniently the first brake-applying means comprises an hydraulic piston and cylinder assembly which acts between the abutment faces of one of the pairs to displace the pressure plates for normal service braking, and the second brake-applying means comprises a wedge which acts between the abutment faces of the other pair and is adapted to be withdrawn in a radial direction to displace the pressure plates for parking or braking in an emergency.

Preferably the hydraulic piston and cylinder assembly and the wedge are both assembled into the expander mechanism, and the unit so formed is then inserted into the brake housing as described above. It may be necessary to displace the wedge inwardly, for example so that it does not contact the housing at its outer end. Similarly it may be necessary to displace the hydraulic assembly inwardly to avoid contact with the housing.

The action of the tension return springs holds the hydraulic piston and cylinder assembly captive within the unit, and movement of the wedge in an outwards direction is prevented by the engagement of projections at its inner end with the abutment faces.

After the brake has been installed in the housing in such an attitude that a radial opening in the housing is superimposed upon the wedge, whereafter the brake can be operated by withdrawal of the wedge relatively from the brake.

The inclined edges of the wedge may engage slidably with the complementary abutment faces on the pressure plates positioned between the inner and outer peripheral edges of the plates and between which is defined a circumferentially extending gap in which the wedge is accommodated.

Two embodiments of our invention are illustrated in the accompanying drawings in which:-

Figure 1 is an end view of a portion of a spreading brake;

Figure 2 is a section on the line 2-2 of Figure 1; and

Figure 3 is a view similar to the upper portion of Figure 1 but showing a modification.

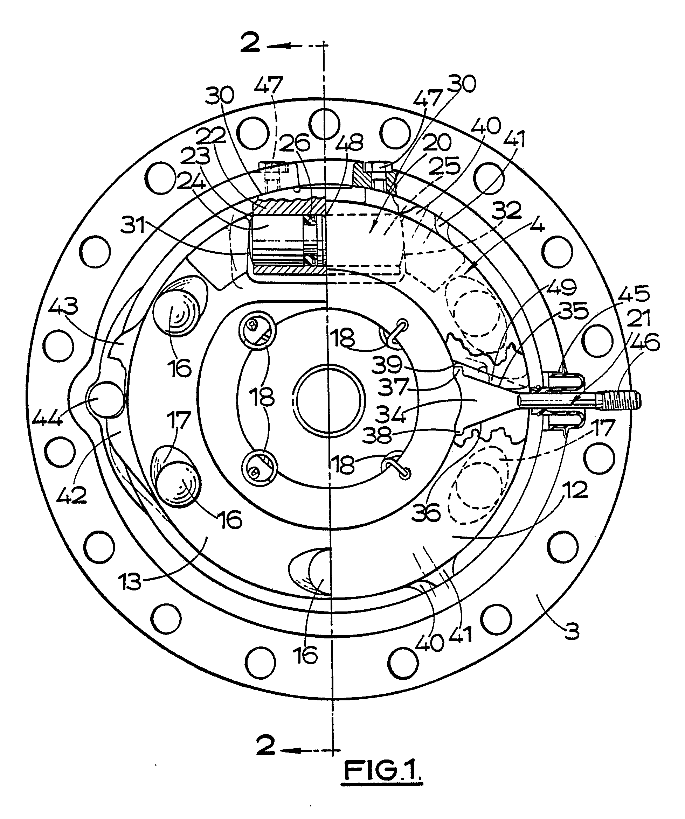

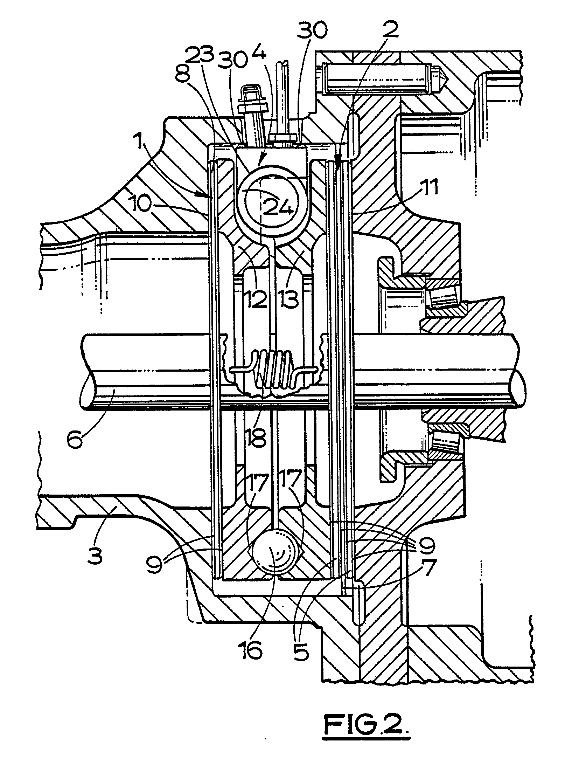

The brake illustrated in Figures 1 and 2 of the drawings is of the spreading type in which two sets 1, 2 of friction discs are located in a housing 3 on opposite sides of an expander mechanism 4. The housing 3 has an internal wall having a contour of substantially circular outline.

The set 2 comprises a pair of rotatable friction plates 5 which are slidably keyed to a shaft 6 which extends axially through the housing 3, and a stationary intermediate disc 7 which is disposed between the plates 5 of each pair and is keyed to the housing 3 against relative rotation.

The set 1 comprises a single friction plate 8, also slidably keyed to the shaft 6.

Friction linings 9 on opposite sides of each plate 5, 8 are adapted to be brought into engagement with the intermediate disc 7 and with spaced opposed radial braking surfaces 10, 11 at opposite ends of the housing 3 upon operation of the expander mechanism 4.

The expander mechanism 4 comprises a pair of pressure plates 12, 13 which are located between the plate 8 and the innermost plates of the set 2 and which are centred in the housing 3. Balls 16 are located in co-operating oppositely angularly spaced recesses 17 in the adjacent faces of the pressure plates 12, 13, and the recesses 17 lie on pitch circles of constant and equal diameters. A plurality of tension return springs 18 act between the pressure plates 12, 13 to hold the mechanism 4 in a retracted position with the balls 16 co-operating with the bases of ramps defined by end faces of the recesses 17.

The expander mechanism 4 is combined into an actuator unit with an hydraulic actuator 20 and a mechanical actuator 21.

As illustrated the hydraulic actuator 20 comprises a cylinder 22 having an open-ended longitudinal through-bore 23 of which the axis is chorded to the pressure plates. The cylinder 22 is housed between the pressure plates 12, 13 being located between the inner and outer diameters of the pressure plates 12, 13. The outer face of the cylinder 22 is provided with discrete locations 30 of arcuate outline complementary to that of the housing 3. A pair of opposed pistons 24, 25, each provided with a seal 26, work in the bore 23.

The outer ends of the pistons 24, 25 co-operate with respective abutment faces 31, 32 on the pressure plates 12, 13 at such locations that the lines of action of the applying forces from the pistons 24, 25 each lie substantially on the pitch circle of the recesses 17 of the respective pressure plates 12, 13.

The mechanical actuator 21 comprises a wedge 34 disposed at the inner end of a pull-rod 46 which has a threaded outer end. The end edges 35, 36 of the wedge 34 diverge in a radially inwards direction and at their inner ends are provided with projections 37, 38. The wedge 34 is located between inclined abutment faces 39 on the pressure plates 12, 13, which faces are spaced angularly from the faces 31, 32. The wedge 34 is thereby accommodated within a recess defined between the two faces 39. Each face 39 includes at an intermediate point in its length disposed radially outwardly from the projections 37, 38, a projection 49 of curved outline with which the end edges 35, 36 engage slidably.

The pressure plates 12, 13 are both provided with a pair of angularly spaced pilots 40, 41 having arcuate outer ends and which conform to the internal curvature of the housing 3, and each pressure plate 12, 13 is also provided with an abutment lug 42, 43 spaced angularly from the pilots 40, 41.

The unit is adapted to be inserted into the housing 3 through an open end in such an orientation that the space between the two lugs 42 and 43 is aligned with an axially extending anchor pin 44, and the wedge 34 is aligned with an axially extending line upon which lies a radial opening 45 in the housing 3. Before this takes place the wedge 34 is displaced inwardly to ensure that the outer end of the rod 46 does not provide an obstruction to the insertion of the unit.

The unit is inserted until the wedge 34 is aligned with the opening 45. In this position the lugs 42 and 43 straddle the pin 44, the regions of the edges of the pressure plates 12, 13 between the lugs 42 and 43 co-operate with the pin 44 to form a location for the plates 12, 13 which are therefore centred by that engagement, and by the engagement of the pilots 41, 42 with the internal, curved, surface of the housing 3.

When the opening 45 is superimposed over the wedge 34, the pull-rod 46 is withdrawn to project through the opening 45, and brake transmission means can be connected to the threaded outer end of the rod 46. In this position the cylinder 22 is secured to the housing by means of bolts 47 which are screwed into tapped holes in the cylinder 22 to clamp the locations 30 against the curved inner face of the housing 3.

The application of the brake is initiated by moving the pressure plates 12, 13 angularly in opposite directions which causes the pressure plates 12, 13 to move axially relatively away from each other due to the tendency for the balls 16 to ride up the ramps defined by the end faces of the recesses 17. This urges the frictions plates 5, 8 into engagement with the radial surfaces 10, 11 on the housing 3. The pressure plates 12, 13 are then carried round with the discs 1 until one is arrested by the engagement of the lug 42 or 43 on a respective plate with a drag-taking abutment, defined by an axially extending anchor pin 44.

To apply the brake for normal service braking, a pressure space 48 in the bore 23 between the pistons 24, 25 is pressurised through an external connection 48. This urges the piston 24, 25 apart, in turn to move the pressure plates 12, 13 angularly as described above.

To apply the brake mechanically or in an emergency the pull rod 46 is relatively withdrawn from the housing 3. The engagement of the end edges 35, 36 with the curved projections 49 then urges the pressure plates 12, 13 angularly in opposite directions, and the end edges 35, 36 may also rock on the projections 49 as the pressure plates 12, 13 move relative to each other and to the housing.

As the friction linings 9 wear the wedge 34 is withdrawn by progressively greater distances when the brake is applied mechanically. This can continue until the projections 37, 38 on the wedge 34 engage with the inner ends of the curved projections 49 to define a stop. This indicates that the linings 9 have reached a critical state and acts to limit the extent by which the wedge 34 can be withdrawn from the housing 3.

In the unit described above, before insertion into the housing 3, the cylinder 22 is held captive between the pressure plates 12, 13 by the action of the tension return springs 18.

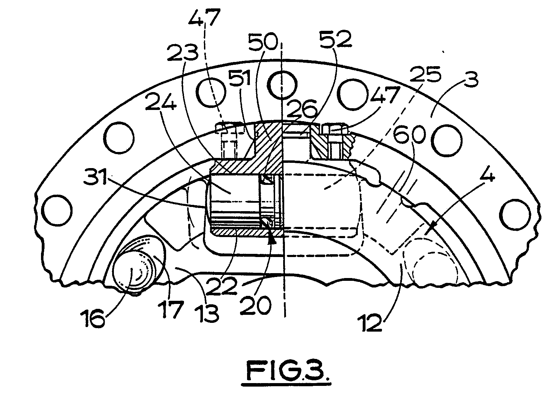

In the modified construction illustrated in Figure 3, the cylinder 22 is provided with a central circular spigot 50 which is adapted to be received in a complementary opening 51 in the housing 3, and the spigot 50 carries an annular seal 52.

To enable the unit to be inserted into the housing 3 as described above, the cylinder 22 is first displaced inwards in a radial direction so that the outer end of the spigot can be slid across the inner surface of the housing 3. When the unit is in position, the cylinder 22 is moved radially outwards to register the spigot 50 in the opening 51 in a sealing manner.

This provides a clean housing profile, locates the hydraulic actuator 20, accurately and strongly, and provides easy access to the supply and bleed ports which extend through the spigot 50.

The modification of Figure 3 is otherwise the same as that of Figures 1 and 2, and corresponding reference numerals have been applied to corresponding parts.

In this construction, however, the pressure plates 12, 13 co-operate with radial pilot lugs 60 on the housing 3.

## Claims

1. A self-energising disc brake in which rotatable friction discs (1,2) provided with linings (9) of friction material are adapted to be brought into engagement with spaced opposed braking surfaces (10,11) in a housing (3) by pressure plates (12,13) located between the friction discs and centred by stationary locations, balls or rollers (16) are located in co-operating oppositely inclined angularly spaced recesses (17) in the adjacent faces of the pressure plates, tension springs (18) act between the plates to urge them relatively towards each other, and the application of the brake is initiated by moving the pressure plates angularly in opposite directions, the pressure plates then moving apart by a tendency for the balls or rollers to ride up ramps defined by the edges of the recesses so that the pressure plates move into engagement with the friction discs which are urged into engagement with the radial surfaces, the pressure plates being carried round with the friction discs until one is arrested by the engagement of a lug (42,43) on the plate with a drag-taking stop abutment (44) in the housing, and the continued angular movement of the other pressure plate providing a servo action, characterised in that the pressure plates (12,13), the balls or rollers (16), and the tension springs (18) define an expander mechanism of substantially circular outline which is adapted to be inserted into the housing (3) in an axial direction and through an open end of the housing, the housing (3) having a substantially circular internal profile complementary to that of the expander mechanism, and the pressure plates being provided with brake-actuating force-receiving abutment faces (31,32;49) with which brake-applying means are adapted to co-operate and which are positioned between the inner and outer peripheral edges of the plates.

2. A brake according to claim 1, characterised in that the pressure plates (12,13) are both provided with two pairs of brake-actuating force-receiving abutment faces (31,32;49), of which the two pairs are relatively spaced circumferentially and are adapted to be acted upon by first and second brake-applying means (20,21).

3. A brake according to claim 2, characterised in that the first brake-applying means (20) comprises an hydraulic piston and cylinder assembly which acts between the abutment faces (31,32) of one of the pairs to displace the pressure plates for normal service braking, and the second brake-applying means (21) comprises a wedge (34) which acts between the abutment faces (49) of the other pair and is adapted to be withdrawn in a radial direction to displace the pressure plates for parking or braking in an emergency.

4. A brake according to claim 3, characterised in that the hydraulic piston and cylinder assembly (20) and the wedge (34) are both assembled into the expander mechanism before the unit so formed is inserted into the brake housing (3).

5. A brake according to claim 4, characterised in that the action of the tension return springs (18) holds the hydraulic piston and cylinder assembly (20) captive within the unit, and movement of the wedge (34) in an outwards direction is limited by the engagement of projections (38, 39) at its inner end with the abutment faces (49).

6. A brake according to any of claims 3-5, characterised in that the brake is installed in the housing (3) in such an attitude that a radial opening (45) in the housing (3) is superimposed upon the wedge (34), whereafter the brake can be operated by withdrawal of the wedge relatively from the brake.

7. A brake according to claim 6, characterised in that the wedge (34) is disposed at the inner end of a radial pull-rod (46), and both the pull-rod (46) and the wedge (34) are disposed inwardly to enable the expander mechanism to be inserted into the housing (3) with the outer end of the pull-rod (46) spaced inwardly from the internal wall of the housing (3).

8. A brake according to any of claims 3-7, characterised in that the inclined edges (35,36) of the wedge (34) engage slidably with the complementary abutment faces (49) on the pressure plates (12,13) and between which is defined a circumferentially extending gap in which the wedge is accommodated.

9. A brake according to any preceding claim, characterised in that the pressure plates (12,13) are provided with angularly spaced pilots (40,41) having arcuate outer ends which confirm to the curvature of the housing (3).

10. A brake according to any of claims 1-8, characterised in that arcuate surfaces on the pressure plates (12,13) co-operate with radial pilots (60) on the housing (3).

FIG.1.

FIG.2.

FIG.3.

## DOCUMENTS CONSIDERED TO BE RELEVANT

EP 88309450.0

| Category | Citation of document with indication, where appropriate, of relevant passages | Relevant to claim | CLASSIFICATION OF THE APPLICATION (Int. Cl.4) |
|---|---|---|---|
| A | US - A - 2 731 114 (LAMBERT BRAKE CORP.)  <br> * Fig. 1,2 * | 1,2 | F 16 D 55/14 |
| A | GB - A - 1 397 552 (GIRLING LTD.)  <br> * Fig. 5,6,7,8 * | 1,2 | |
| A,P | US - A - 4 736 820 (LUCAS IND.)  <br> * Fig. 1 * | 2,3 | |
| A | US - A - 4 676 345 (LUCAS IND.)  <br> * Fig. 1 * | 2,10 | |

TECHNICAL FIELDS
SEARCHED (Int. Cl.4)

F 16 D 55/00

The present search report has been drawn up for all claims

| Place of search | Date of completion of the search | Examiner |
|---|---|---|
| VIENNA | 20-12-1988 | KAMMERER |